# EUROPÄISCHE PATENTANMELDUNG

(11) **EP 0 706 918 A2**
(43) Veröffentlichungstag der Anmeldung: **17.04.1996**
(21) Anmeldenummer: 95115224.8
(22) Anmeldetag: 27.09.1995
(51) Int. Cl.: B60R 25/00

(54) **Diebstahlsicherung für Sattelschlepperauflieger**

(30) Priorität: 07.10.1994 DE 4435880
(71) Anmelder: Engelking, Petra, D-20539 Hamburg (DE)
(72) Erfinder: Engelking, Bernd, D-20539 Hamburg (DE)
(74) Vertreter: Jaeschke, Rainer

(57) **Zusammenfassung**

Die Erfindung betrifft eine Vorrichtung (10) zum Sichern des Aufliegers eines Sattelschleppers. Die Vorrichtung weist ein den Königsbolzen (11) des Aufliegers zumindest teilweise umgebendes Gehäuse (12), das mit wenigstens einem zwischen einer Schließlage und einer Loslage beweglichen Verschlußmittel (17) versehen ist, das mit dem oberen Teil (21) des Königsbolzens (11) in Eingriff bringbar ist und in der Schließlage einen Freiraum (19) begrenzt, dessen lichte Weite größer als oder gleich dem äußeren Durchmesser des oberen Teils (20) des Königsbolzens (11) und zumindest an einer Stelle kleiner als der äußere Durchmesser des unteren erweiterten Teils (21) des Königsbolzens (11) ist. Durch diese Ausbildung kann die Vorrichtung (10) in Schließlage nicht vom Königsbolzen (11) abgezogen werden, so daß ein unbefugtes Entwenden des Aufliegers verhindert oder wesentlich erschwert wird.

## Beschreibung

Die Erfindung betrifft eine Vorrichtung zum Sichern des Aufliegers eines Sattelschleppers.

Im Zuge der sich immer stärker entwickelnden Kriminalität ist es häufig der Fall, daß Waren nicht mehr nur aus geparkten Lastkraftwagen entwendet werden, sondern daß der komplette Lastzug entwendet wird. Insbesondere stellen geparkte Auflieger ohne Zugmaschine in der Regel eine "leichte Beute" nicht nur für professionelle Diebe dar, da die Auflieger mit einer genormten Anhängevorrichtung, dem sogenannten Königsbolzen, versehen sind. Der Dieb benötigt lediglich eine Zugmaschine beliebiger Bauart, um den Auflieger anzukuppeln und kann dann mitsamt dem Auflieger einfach davonfahren, um anschließend, beispielsweise in einem Lagerhaus, den Auflieger in Ruhe zu entladen.

Der Königsbolzen ist ein nach unten gerichteter Vorsprung des Aufliegers mit kreisrundem Querschnitt und genormten Abmessungen, der einen im wesentlichen zylindrischen, oberen Teil und einen unteren dickeren, scheibenförmigen Teil aufweist. Der untere Teil weist dabei einen größeren Durchmesser als der obere Abschnitt auf. Der Königsbolzen paßt genau in die Aufnahmeaussparung der Ankuppelvorrichtung der Zugmaschine.

Da ein Auflieger und vor allem die Ladung im allgemeinen von hohem Wert sind, besteht ein Bedürfnis für eine Vorrichtung, mit der in einfacher und wirksamer Weise der Auflieger gesichert werden kann. Der Erfindung liegt demnach die Aufgabe zugrunde, eine Vorrichtung zu schaffen, mit der eine Entwendung des gesamten Aufliegers verhindert werden kann.

Verhindern bedeutet in diesem Zusammenhang, daß ein Dieb zumindest einige Zeit und entsprechendes Werkzeug benötigt, um die Diebstahlsicherung zu lösen. Die benötigte Zeit zum Aufbrechen ist jedoch, falls es zu lange dauert, ein Faktor, der einen Dieb davon abhält, einen Auflieger zu entwenden, da die Gefahr, entdeckt zu werden, zu groß ist.

Diese Aufgabe wird gemäß der Erfindung durch eine Diebstahlsicherung gelöst, die ein den Königsbolzen des Aufliegers zumindest teilweise umgebendes Gehäuse aufweist, das mit wenigstens einem zwischen einer Schließlage und einer Loslage beweglichen Verschlußmittel versehen ist, das mit dem oberen Teil des Königsbolzens in Eingriff bringbar ist und in der Schließlage einen Freiraum begrenzt, dessen lichte Weite größer oder gleich dem äußeren Durchmesser des oberen Teils des Königsbolzens und zumindest an einer Stelle kleiner als der äußere Durchmesser des unteren erweiterten Teils des Königsbolzens ist, so daß die Vorrichtung in Schließlage nicht vom Königsbolzen abgezogen werden kann. Mit einer derartigen Vorrichtung ist der Königsbolzen für die Aufnahme in der Aufnahmekupplung der Zugmaschine blockiert, da die spezifischen Abmessungen des Königsbolzen verändert sind. Da der Königsbolzen schlecht sichtbar unterhalb des Aufliegers angeordnet ist, genügt schon das bloße Vorhandensein dieser erfindungsgemäßen Diebstahlsicherung, da ein "blindes" Ankuppeln beispielsweise durch nur einen Täter nicht mehr möglich ist. Der Dieb muß zunächst in auffälliger Weise den Auflieger inspizieren und unter den Auflieger kriechen, um die Diebstahlsicherung zu entfernen. Ein Entwenden "en passant" wird dadurch wirksam verhindert. In der Loslage kann die Diebstahlsicherung ohne weiteres von dem Königsbolzen abgezogen werden.

Besonders zweckmäßig und wirksam ist es jedoch, wenn das Verschlußmittel in der Schließlage durch wenigstens ein Schloß verschließbar ist. Ein Entfernen der Diebstahlsicherung ist dann nur noch mit dem entsprechenden Schlüssel möglich. Für ein unerlaubtes Entwenden müßte daher das Schloß aufgebrochen werden, wodurch zum einen Lärm verursacht wird. Zum anderen benötigt der Dieb unter den ungünstigen räumlichen Bedingungen unterhalb des Aufliegers einige Zeit, um die Sicherung aufzubrechen. Beides sind jedoch Faktoren, die einen Dieb von der Entwendung eines derartig gesicherten Aufliegers in der Regel abhalten.

In einer einfachen Ausführungsform der Erfindung ist vorgesehen, daß das Gehäuse als Verschlußmittel zwei gelenkig miteinander verbundene Gehäusehälften aufweist. Die beiden Gehäusehälften wirken wie eine Klammer, die um den zylindrischen Teil des Königsbolzens gelegt werden. An den freien Enden der Gehäusehälften können beispielsweise Ösen und/oder Riegel vorhanden sein, durch die die Diebstahlsicherung mittels eines herkömmlichen Vorhängeschlosses verschlossen werden könnte.

In einer zweckmäßigen Ausführungsform ist vorgesehen, daß die gelenkig miteinander verbundenen Gehäusehälften mit wenigstens einem Vorsprung versehen sind, so daß die Gehäusehälften mit dem Vorsprung in der Schließlage einen Freiraum begrenzen, dessen lichte Weite größer als oder gleich dem Durchmesser des oberen Teils und kleiner als der untere, dicke Teil des Königsbolzens ist. Dadurch können die Gehäusehälften massiver ausgebildet sein, wodurch ein gewaltsames Aufbrechen erschwert wird.

In einer anderen Ausführungsform der Erfindung ist vorgesehen, daß das Gehäuse wenigstens eine Aussparung aufweist, deren kleinste lichte Weite größer als oder gleich dem größten Durchmesser des Königsbolzens ist, und das Verschlußmittel als wenigstens ein in die Aussparung hinein beweglicher Vorsprung ausgebildet ist. Diese Ausbildung hat den Vorteil, daß die Diebstahlsicherung keine beweglichen Teile derart hat, die einen unmittelbaren Ansatz zum Aufbrechen von außen, beispielsweise mit einer Brechstange, bieten. Der in die Aussparung hinein bewegliche Vorsprung kann beispielsweise als einfacher Schließstift ausgebildet sein, der zweckmäßigerweise über ein Zylinderschloß betätigt wird. Somit ist das Verschlußmittel von dem Gehäuse überdeckt, und ein gezieltes Ansetzen von Aufbrech- oder Bohrwerkzeugen ist nicht möglich.

Zweckmäßig kann es sein, daß das Gehäuse wenigstens eine Aussparung aufweist, deren kleinste lichte Weite größer als oder gleich dem größten Durchmesser des Königsbolzens ist, und das Verschlußmittel als drehbar in dem Gehäuse gelagerte Scheibe ausgebildet ist, die mit einem radial nach außen weisenden Vorsprung versehen ist, der in der Schließlage in die Aussparung eingreift. Mit einer derartigen Vorrichtung wird eine in einfacher Weise durch ein Zylinderschloß betätigbare Arretierung der Vorrichtung auf dem Königsbolzen bewirkt, da die Drehbewegung der Scheibe unmittelbar vom Schlüssel des Schließzylinders übertragen werden kann. Ferner können somit Elemente mit relativ großen Querschnitten eine Verengung der Aussparung des Gehäuses bewirken, so daß ein gewaltsames Aufbrechen wirksam verhindert werden kann.

An dieser Stelle sei darauf hingewiesen, daß ein Dieb beim Entfernen der Diebstahlsicherung stets darauf achten muß, daß der Königsbolzen unversehrt bleibt, da andernfalls die Tragfunktion nicht mehr gewährleistet ist. Es sollte daher bei den Abmessungen der Diebstahlsicherung in vorteilhafter Weise darauf geachtet werden, daß die Diebstahlsicherung in Form einer Manschette ausgebildet wird, die mehr oder weniger spielfrei unterhalb des Aufliegers an dem Königsbolzen anbringbar ist. Irgendwelche Werkzeuge, beispielsweise Brechstangen, Sägen und dergleichen haben dann keinen oder nur einen ungünstigen Ansatzpunkt, wodurch das gewaltsame Entfernen der Diebstahlsicherung wesentlich erschwert wird.

In einer bevorzugten Ausführungsform der Erfindung ist vorgesehen, daß das Gehäuse wenigstens eine Aussparung aufweist, deren kleinste lichte Weite größer als oder gleich dem größten Durchmesser des Königsbolzens ist, und das Verschlußmittel als eine drehbar gelagerte Verriegelungsscheibe ausgebildet ist, die eine zur Drehachse exzentrische Aussparung aufweist, deren lichte Weite größer als oder gleich dem größten Durchmesser des Königsbolzens ist, und die in der Loslage mit der Aussparung des Gehäuses fluchtet, wobei eine Drehung der Verriegelungsscheibe in die Schließlage die Aussparung relativ gegenüber der Aussparung des Gehäuses verschoben und zumindest teilweise von dem Gehäuse überdeckt wird. Mit dieser Ausbildung der Diebstahlsicherung ist es möglich, daß die die Arretierung bewirkenden Mittel besonders massiv ausgebildet werden können. Ferner kann das Gehäuse so ausgebildet sein, daß von außen kein ausreichender Ansatz mehr zum gewaltsamen Betätigen des sich bewegenden Verschlußmittels vorhanden ist. Dabei kann vorgesehen werden, daß die Verriegelungsscheibe von außen nicht erkennbar ist und nur über einen Hebel oder dergleichen betätigt werden kann.

In einer weiteren zweckmäßigen Ausgestaltung der Erfindung weist die drehbare Verriegelungsscheibe ein Betätigungselement auf, das wenigstens eine Sollbruchstelle aufweist. Die Sollbruchstelle ist dabei so ausgelegt, daß die Verriegelungseinrichtung, beispielsweise der Schließbolzen des Schließzylinders größeren Belastungen standhält. Beim Versuch, die Verriegelungsscheibe gewaltsam zu drehen, bricht das Betätigungselement ab, so daß auch bei der Öffnung des Schlosses die Diebstahlsicherung nur mit Mühe geöffnet und vom Königsbolzen abgezogen werden kann.

In einer entsprechenden Ausführungsform der Erfindung ist vorgesehen, daß das Gehäuse zwei scheibenförmige Platten mit jeweils einer Aussparung aufweist, deren kleinste lichte Weite größer als oder gleich dem größten Durchmesser des Königsbolzens ist, die über wenigstens einen axialen Vorsprung mit einem Abstand miteinander verbunden sind, so daß zwischen den Platten eine im wesentlichen ringförmige Nut vorhanden ist, in dem die Verriegelungsscheibe mit der exzentrischen Aussparung drehbar gelagert ist. Die Verriegelungsscheibe kann dabei an ihrem Umfang mit wenigstens einem Hebel versehen sein, der durch die Gehäusewandung durch eine teilweise entlang dem Gehäuseumfang umlaufende schlitzartige Nut ragt.

Zweckmäßig ist es hierbei, daß die Verriegelungsscheibe wenigstens eine Aussparung aufweist, in die wenigstens ein Schließstift eingreift, so daß eine Drehbewegung der Verriegelungsscheibe verhindert wird. Die Aussparung kann dabei radial, axial oder in einem anderen Winkel zur Verriegelungsscheibe verlaufen. Zum Verschließen der Vorrichtung kann dann ein Schließzylinder verwendet werden, der beispielsweise als Druckschließzylinder ausgebildet ist, dessen Schließstift in bekannter Weise betätigbar ist und in diese Aussparung eingreifen kann.

Für die Herstellung einer besonders massiven Diebstahlsicherung kann es zweckmäßig sein, daß die Platten miteinander verschweißt sind. Ferner ist es auch möglich, daß die Platten miteinander verschraubt sind, wobei die Schrauben nur von einer Flachseite des Gehäuses zugänglich sind, so daß in Einbaulage die Schrauben von der dem Königsbolzen zugekehrten Seite des Aufliegers bedeckt sind. Auch bei dieser Ausführungsform kann das Gehäuse in Schließstellung und in aufgesteckter Position nicht geöffnet werden.

Zweckmäßig ist es in jedem Fall, daß zumindest die beweglichen Mittel mit einer korrosionsbeständigen Schicht versehen sind. Dies hat den Vorteil, daß auch bei schlechten Witterungsbedingungen und bei längeren Standzeiten des Aufliegers im Freien eine Korrosion der beweglichen Teile vermieden wird, so daß die Diebstahlsicherung ordnungsgemäß stets leicht geöffnet werden kann. Insbesondere ist es zweckmäßig, eine Beschichtung derart zu wählen, daß durch den metallischen Kontakt zwischen Diebstahlsicherung einerseits und Königsbolzen andererseits letzterer nicht angegriffen wird.

Weiterhin kann es zweckmäßig sein, daß zumindest die beweglichen Mittel mit einer festschmierstoffhaltigen Schicht versehen sind. Dadurch wird in vorteilhafter Weise die Funktionssicherheit der Vorrichtung weiter erhöht. Die gewünschten Eigenschaften hinsichtlich der Schmierwirkung und der Korrosionsbeständigkeit können durch eine Schicht aus Polytetrafluorethylen, die in bekannter Weise beispielsweise auf das Verschlußmittel aufgebracht wird, erreicht werden.

Zusammenfassend kann festgestellt werden, daß mit einer Diebstahlsicherung gemäß der Erfindung eine wirksame Wegfahrsperre beziehungsweise Abschleppsperre für einen Auflieger bereitgestellt wird. Insbesondere handelt es sich um eine rein mechanische Vorrichtung, so daß keine elektrische Energie benötigt wird, die zumeist auf Aufliegern ohnehin nicht oder nur in begrenzter Menge zur Verfügung steht. Es ist natürlich möglich innerhalb des Gehäuses einen batteriebetriebenen Warnsummer einzubauen, der bei einem Versuch eines gewaltsamen Öffnens aktiviert wird, so daß durch die Lärmentwicklung die Täter abgeschreckt werden könnten. Dabei wäre jedoch darauf zu achten, daß der Summer lauter als das Motorengeräusch des Dieseltriebwerkes einer Zugmaschine ist, da der Summer ansonsten leicht übertönt werden könnte.

Die Erfindung wird im folgenden anhand der schematischen Zeichnung näher erläutert. Es zeigen:

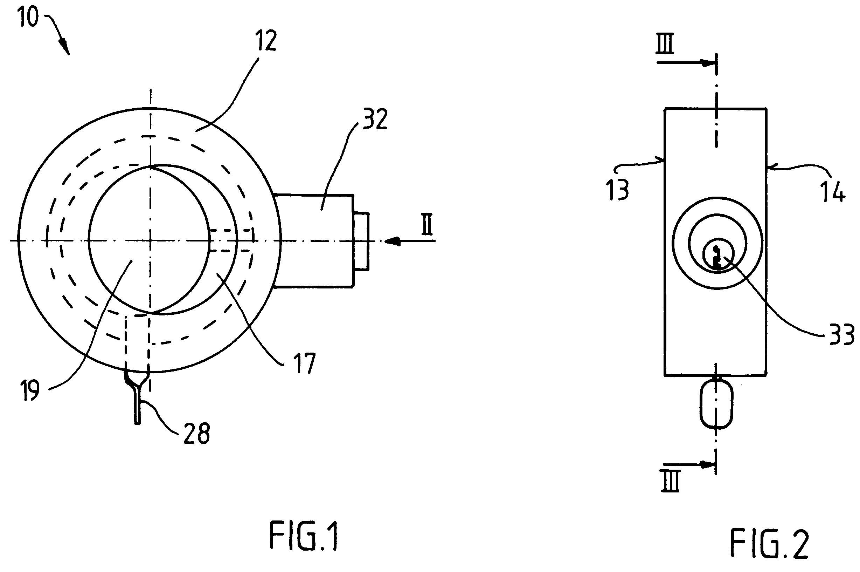

- Fig. 1: eine Draufsicht auf eine Diebstahlsicherung in Schließstellung gemäß der Erfindung,
- Fig. 2: eine Ansicht in Richtung des Pfeiles II in Fig. 1,
- Fig. 3: einen Schnitt entlang der Linie III-III in Fig. 2,
- Fig. 4: einen Schnitt entlang der Linie IV-IV in Fig. 3,
- Fig. 5: einen Schnitt entlang der Linie III-III in Fig. 2, jedoch in Loslage der Diebstahlsicherung, und
- Fig. 6: einen Schnitt entlang der Linie VI-VI in Fig. 5.

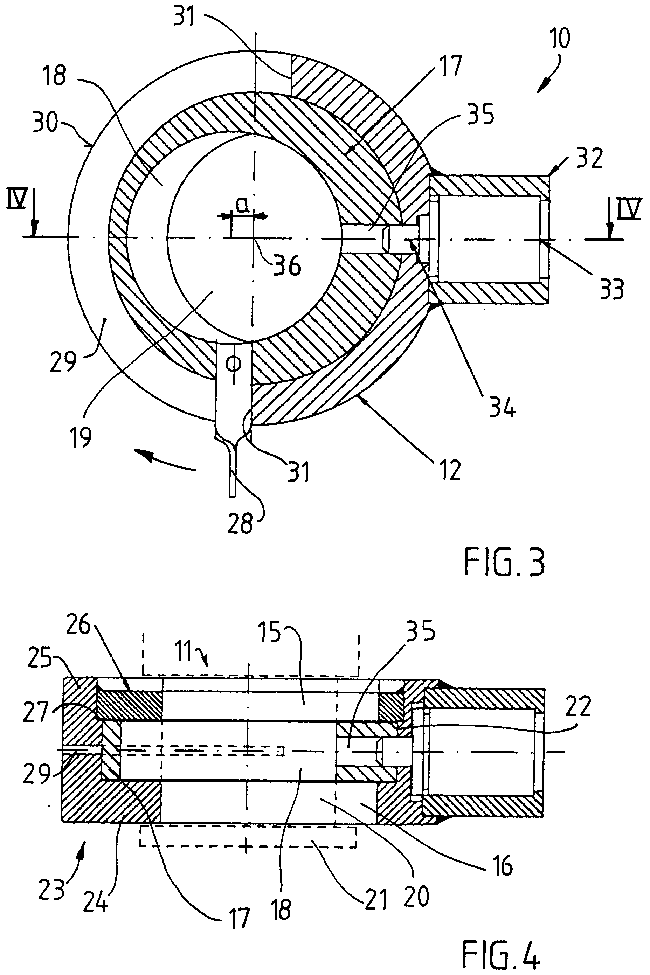

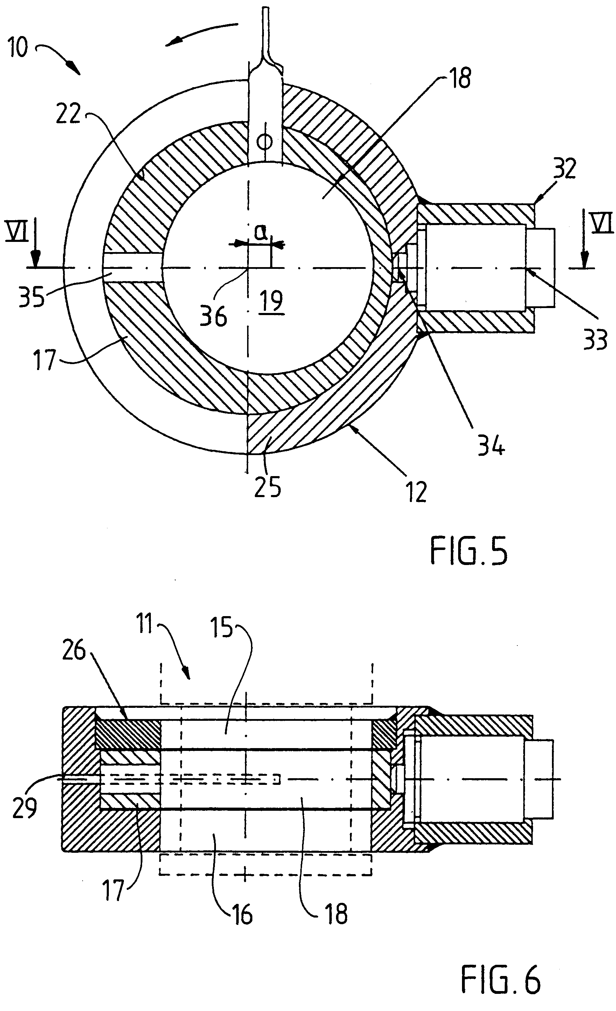

In der Zeichnung ist eine Diebstahlsicherung 10 für den Auflieger eines Sattelschleppers dargestellt, die den Königsbolzen der Kupplungseinrichtung des Aufliegers zumindest teilweise umschließt, so daß ein unbefugtes Ankuppeln einer Zugmaschine an den Auflieger nicht möglich ist. Der Königsbolzen ist in der Zeichnung nicht näher dargestellt, da es sich um ein allgemein bekanntes Element zum Ankuppeln eines Aufliegers an eine Zugmaschine handelt, das zudem genormte Abmaße besitzt. Der Königsbolzen weist einen oberen, im wesentlichen zylindrischen Teil auf, an den sich auf der unteren Seite ein im wesentlichen scheibenförmiger Teil anschließt, der einen größeren Durchmesser als der obere Teil aufweist. In den Fig. 4 und 6 ist der Königsbolzen 11 durch gestrichelte Linien dargestellt.

Die Diebstahlsicherung 10 weist ein im wesentlichen zylindrisches Gehäuse 12 auf. Das Gehäuse 12 ist auf seinen beiden Flachseiten 13, 14 jeweils mit einer vorzugsweisen kreisrunden Aussparung 15, 16 versehen, deren Abmessungen so bemessen sind, daß die kleinste lichte Weite größer als oder zumindest gleich groß wie der größte Durchmesser des Königsbolzens 11 ist. Es ist daher möglich, das Gehäuse über den Königsbolzen 11 zu stülpen.

Innerhalb des Gehäuses 12 ist eine Verriegelungsscheibe 17 drehbar um eine parallel zur Längsachse des Königsbolzens verlaufende Achse 36 gelagert. Die Verriegelungsscheibe 17 weist auf ihrer Flachseite ebenfalls eine vorzugsweise kreisrunde und durchgehende Aussparung 18 auf, deren Abmessungen ebenfalls so bemessen sind, daß die kleinste lichte Weite größer als oder zumindest gleich groß wie der größte Durchmesser des Königsbolzens 11 ist. Die Aussparung 18 ist auf der Verriegelungsscheibe 17 um ein Maß a exzentrisch zur Drehachse 36 angeordnet.

Im einzelnen ist die Anordnung so getroffen, daß durch eine entsprechende Drehung der Verriegelungsscheibe 17 die Aussparung 18 in der Loslage (Fig. 5 und Fig. 6) mit den Aussparungen 15, 16 des Gehäuses 12 fluchtet, so daß ein Durchgang 19 entsteht, der parallel zur Längsachse des Königsbolzen verläuft und dessen kleinste lichte Weite größer als oder zumindest gleich groß wie der Durchmesser des unteren Endes 21 des Königsbolzens ist. Durch eine Drehung um 180° wird durch die exzentrische Anordnung der Aussparung 18 auf der Verriegelungsscheibe 17 der Querschnitt des Durchganges 19 im Bereich oberhalb des unteren Endes des Königsbolzens verkleinert, so daß die kleinste lichte Weite kleiner als der größte Durchmesser des Königsbolzens 11 und mindestens gleich groß wie der Durchmesser des oberen Abschnitts 20 des Königsbolzens 11 ist. Die Verreigelungsscheibe liegt demnach auf dem unteren Abschnitt des Königsbolzen auf, so daß die Diebstahlsicherung 10 nicht mehr vom Königsbolzen abgezogen werden kann.

Die Verriegelungsscheibe 17 ist bei dem in der Zeichnung dargestellten Ausführungsbeispiel in einer ringförmigen Nut 22 innerhalb des Gehäuses 12 drehbar gelagert. Das Gehäuse 12 weist ein im Querschnitt U-förmiges Bodenelement 23 auf, dessen Boden 24 mit der unteren Aussparung 16 versehen ist. Die lichte Weite des ringförmigen oberen Teils 25 des Bodenelementes 23 ist etwas größer als der Durchmesser der Verriegelungsscheibe 17. Das Bodenelement 23 ist von oben durch einen ringförmigen Deckel 26 verschlossen, in dem die obere Aussparung 15 angeordnet ist. Der Deckel 26 und das Bodenelement 23 sind derart miteinander verbunden, daß zum einen die jeweiligen Aussparungen 15, 16 miteinander fluchten und zum anderen die Höhe der dadurch gebildeten Nut 22 eine Höhe aufweist, die zumindest gleich hoch wie die Dicke der Verriegelungsscheibe 17 ist, so daß letztere leicht innerhalb der Nut 22 verdreht werden kann. Dazu weist das Bodenelement 23 einen entsprechend bemessenen Absatz 27 auf, auf den sich der Deckel 26 abstützt.

Zweckmäßig kann es sein, wenn die Verriegelungsscheibe 17 und das Gehäuse 12 im wesentlichen konzentrisch zueinander verlaufen, während die Aussparungen 15, 16 exzentrisch zu der Symmetrieachse des Gehäuses verlaufen. Dadurch kann die Herstellung vereinfacht werden. Insbesondere ist es nicht erforderlich, die Ausnehmung zur Aufnahme der Verriegelungsscheibe 17 bezüglich des Gehäuses exzentrisch anzuordnen.

Der Deckel 26 kann grundsätzlich in beliebiger Weise mit dem Bodenelement 23 verbunden werden. Bei der gezeigten Ausführungsform ist der Deckel 26 mit dem Bodenelement 23 verschweißt, um eine besonders feste Verbindung zu bewirken. Es kann aber auch vorgesehen werden, daß der Deckel 26 mit dem Bodenelement 23 verschraubt wird. In diesem Fall ist es zweckmäßig, daß die Schrauben nur von einer Seite, nämlich der Seite, die in Einbaulage von dem Auflieger verdeckt wird, zugänglich sind. Ein unbefugtes Öffnen des Gehäuses ist daher bei aufgesetzter Diebstahlsicherung nicht möglich, während bei abgezogener Diebstahlsicherung ein Öffnen, beispielsweise für Wartungszwecke, möglich bleibt.

An der Umfangsseite der Verriegelungsscheibe 17 ist ein Hebel 28 vorgesehen, mit dem die Verriegelungsscheibe 17 verdreht werden kann. Im einzelnen ist die Anordnung so getroffen, daß der Hebel 28 sich durch eine schlitzförmige Nut 29 erstreckt, die auf der zylindrischen Außenwand des Gehäuses 12 angeordnet ist und von der ringförmigen Nut 22 bis zur äußeren Oberfläche 30 des Gehäuses 12 verläuft. Die schlitzförmige Nut 29 erstreckt sich über etwa 180° bis 200° entlang dem Umfang, so daß die Enden 31 der Nut 29 gleichzeitig Anschläge für die Begrenzung der Drehbewegung für die Verriegelungsscheibe 17 darstellen. Der Hebel kann aber auch durch eine sich axial erstreckende Ringnut geführt sein und entsprechend axial nach unten ausgerichtet sein.

Bei dem in der Zeichnung dargestellten Ausführungsbeispiel ist das Gehäuse 12 an seiner der Schlitznut 29 gegenüberliegenden Seite mit einem sich radial erstreckenden Vorsprung 32 versehen, in dem ein Zylinderschloß 33 angeordnet und befestigt ist. Die Funktionsweise eines Zylinderschlosses und dessen Befestigung sind allgemein bekannt und brauchen daher nicht näher erläutert zu werden. Das Zylinderschloß 33 ist als Steckschloß ausgebildet, dessen Schließbolzen 34 in der Schließlage mit einer Aussparung 35 zusammenwirkt, die auf dem Umfang der Verriegelungsscheibe 17 angeordnet ist. In der Schließlage kann daher die Verriegelungsscheibe festgesetzt werden, so daß ein Öffnen der Diebstahlsicherung nur noch mit dem entsprechenden Schlüssel für das Zylinderschloß erfolgen kann. Es kann auch vorgesehen werden, daß die Verriegelungsscheibe eine axial verlaufende Aussparung aufweist und sich der das Zylinderschloß tragende Vorsprung axial nach unten erstreckt.

Zur Sicherung eines Aufliegers wird die Diebstahlsicherung 10 in ihrer Loslage (Fig. 3 und 4) von unten auf den Königsbolzen beispielsweise bis zur Anlage an die obere Begrenzung des Königsbolzens geschoben. Anschließend wird durch eine Drehung der Verriegelungsscheibe 17 mittels des Hebels 28 der Querschnitt des durch die Aussparungen 15, 16 und 18 gebildeten Durchganges 19 im Bereich der Verriegelungsscheibe 17 aufgrund der exzentrisch angeordneten Aussparung 18 derart verkleinert, daß die Diebstahlsicherung nicht mehr von dem Königsbolzen abgezogen werden kann. In der Schließstellung (Fig. 5 und 6) kann die Verriegelungsscheibe 17 dann durch den Schließbolzen 34 des Zylinderschlosses 33 arretiert werden. Grundsätzlich ist es möglich, daß der Schließstift bei Erreichen der Schließlage durch eine Feder in die Aussparung gedrückt wird. Unter den rauhen Betriebsbedingungen ist es aber zweckmäßig, wenn der Schließstift lediglich über das Zylinderschloß betätigbar ist.

Ein unbefugtes Entfernen der Diebstahlsicherung und somit ein Entwenden des Aufliegers wird somit wirksam verhindert oder zumindest wesentlich erschwert. Insbesondere ist das als drehbare Verriegelungsscheibe ausgebildete Verschlußmittel von außen nicht oder nur sehr schwierig zu erkennen, so daß gezielte Aufbruchshandlungen wesentlich erschwert oder sogar verhindert werden können.

Um ein gewaltsames Aufbrechen zu vermeiden, ist es zweckmäßig, die gesamte Vorrichtung möglichst massiv auszubilden. Dies kann, wie in der Zeichnung dargestellt, durch dicke Wandungen des Gehäuses und durch eine massiv ausgebildete Verriegelungsscheibe bewirkt werden. Das Gehäuse und die Verriegelungsscheibe können beispielsweise aus hochfestem Baustahl oder ggf. auch aus einem legierten Stahl bestehen, der beispielsweise korrosionsbeständig ist. Die Verriegelungsscheibe oder ein auf andere Weise ausgebildetes Verschlußmittel kann beispielsweise mit Polytetrafluorethylen oder einer anderen Kunststoffbeschichtung mit entsprechenden Eigenschaften beschichtet sein, um eine verbesserte Gleitwirkung zu erreichen.

Bei dem in der Zeichnung dargestellten Ausführungsbeispiel sind die Abmessungen der Diebstahlsicherung so getroffen, daß der untere Teil des Königsbolzens unten aus der Vorrichtung hervorsteht. Es ist natürlich auch möglich, daß das Gehäuse nach unten verlängert ausgebildet und beispielsweise durch einen Bodendeckel verschlossen ist. Dies hat den Vorteil, daß die Verriegelungsscheibe von unten überhaupt nicht mehr zugänglich ist, so daß der eventuelle Ansatz von Brech- oder Bohrwerkzeugen nicht mehr möglich ist. Ferner kann, da in diesem Fall die beweglichen Elemente, insbesondere deren Ausmaße, nicht erkennbar sind, ein gezieltes Aufbohren verhindert oder wesentlich erschwert werden. Um ein Ablaufen von Kondenswasser oder dergleichen zu ermöglichen, ist es zweckmäßig, den Bodendeckel mit wenigstens einer Ablaufbohrung zu versehen.

Das Ausmaß der Exzentrizität a ist grundsätzlich beliebig. Es ist jedoch zweckmäßig, wenn die Exzentrizität a so gewählt ist, daß die Diebstahlsicherung 10 im wesentlichen spielfrei am Königsbolzen gehalten wird. Dadurch kann ebenfalls ein Ansatz von Aufbrechwerkzeugen wirksam erschwert werden. Dies bedeutet, daß die Exzentrizität a ein Ausmaß hat, das etwa der halben Differenz zwischen dem Durchmesser des oberen und dem des unteren Abschnittes 20, 21 des Königsbolzens 11 entspricht. Die Höhe des Gehäuses 12 kann dabei im wesentlichen der Höhe des zylindrischen Teils 20 des Königsbolzens 11 mit dem kleineren Durchmesser entsprechen.

### Bezugszeichenliste:

- 10: Diebstahlsicherung
- 11: Königsbolzen
- 12: Gehäuse
- 13: Flachseite
- 14: Flachseite
- 15: Aussparung
- 16: Aussparung
- 17: Verriegelungsscheibe
- 18: Aussparung
- 19: Durchgang
- 20: oberer Teil des Königsbolzens
- 21: unterer Teil des Königsbolzens
- 22: Ringnut
- 23: Bodenelement
- 24: Boden
- 25: oberer Teil
- 26: Deckel
- 27: Vorsprung
- 28: Hebel
- 29: Schlitznut
- 30: Oberfläche
- 31: Nutenden
- 32: Vorsprung
- 33: Zylinderschloß
- 34: Schließbolzen
- 35: Aussparung
- 36: Drehachse
- a: Exzentrizität

## Patentansprüche

1. Vorrichtung (10) zum Sichern des Aufliegers eines Sattelschleppers, die ein den Königsbolzen (11) des Aufliegers zumindest teilweise umgebendes Gehäuse (12) aufweist, das mit wenigstens einem zwischen einer Schließlage (Fig. 3, 4) und einer Loslage (Fig. 5, 6) beweglichen Verschlußmittel (17) versehen ist, das mit dem oberen Teil (21) des Königsbolzens (11) in Eingriff bringbar ist und in der Schließlage einen Freiraum (19) begrenzt, dessen kleinste lichte Weite größer als oder gleich dem äußeren Durchmesser des oberen Teils (20) des Königsbolzens (11) und zumindest an einer Stelle kleiner als der äußere Durchmesser des unteren erweiterten Teils (21) des Königsbolzens (11) ist, dadurch gekennzeichnet, daß das Gehäuse (12) wenigstens eine Aussparung (15, 16) aufweist, die größer als oder gleich dem größten Durchmesser des Königsbolzens (11) ist, und das Verschlußmittel als eine drehbar gelagerte Verriegelungsscheibe (17) ausgebildet ist, die eine zur Drehachse exzentrische Aussparung (18) aufweist, deren lichte Weite größer als oder gleich dem größten Durchmesser des Königsbolzens (11) ist, und die in der Loslage (Fig. 5 und 6) mit der Aussparung (15, 16) des Gehäuses (12) fluchtet, so daß die Vorrichtung in der Loslage auf den Königsbolzen gestülpt werden kann, wobei durch eine Drehung der Verriegelungsscheibe (17) in die Schließlage (Fig. 3 und 4) die Aussparung (18) der Verriegelungsscheibe (17) relativ zu der Aussparung (15, 16) des Gehäuses verschoben und zumindest teilweise von dem Gehäuse (12) überdeckt wird, so daß die Vorrichtung (10) in Schließlage nicht vom Königsbolzen (11) abgezogen werden kann.

2. Vorrichtung nach Anspruch 1, dadurch gekennzeichnet, daß das Gehäuse zwei scheibenförmige Platten (23, 26) aufweist, die über wenigstens einen axialen Vorsprung (27) mit Abstand zueinander miteinander verbunden sind, so daß zwischen den Platten (23, 26) eine ringförmige Nut (22) vorhanden ist, in der die Verriegelungsscheibe (17) mit der exzentrischen Aussparung (18) drehbar gelagert ist, wobei die scheibenförmigen Platten jeweils mit einer Aussparung (15, 16) versehen sind, die miteinander fluchten und deren kleinste lichte Weite größer als oder gleich dem größten Durchmesser des Königsbolzens (11) ist.

3. Vorrichtung nach Anspruch 2, dadurch gekennzeichnet, daß die Platten (23, 26) miteinander verschweißt sind.

4. Vorrichtung nach Anspruch 2, dadurch gekennzeichnet, daß die Platten (23, 26) miteinander verschraubt sind, wobei die Schrauben nur von einer Flachseite (13, 14) des Gehäuses (12) zugänglich sind, so daß in Einbaulage die Schrauben von der dem Königsbolzen (11) zugekehrten Seite des Aufliegers bedeckt sind.

5. Vorrichtung nach einem der Ansprüche 1 bis 4, dadurch gekennzeichnet, daß wenigstens eine Aussparung (15, 16; 18) des Gehäuses (12) und/oder der Verriegelungsscheibe (17) kreisrund ausgebildet ist.

6. Vorrichtung nach Anspruch 1 bis 5, dadurch gekennzeichnet, daß die Verriegelungsscheibe (17) ein Betätigungselement aufweist, das mit wenigstens einer Sollbruchstelle versehen ist.

7. Vorrichtung nach einem der Ansprüche 1 bis 6, dadurch gekennzeichnet, daß die Verriegelungsscheibe (17) an ihrem Umfang mit wenigstens einem radial nach außen weisenden Hebel (28) versehen ist, der durch eine teilweise entlang dem Gehäuseumfang umlaufende schlitzartige Nut (29) durch die Gehäusewandung ragt.

8. Vorrichtung zum Sichern des Aufliegers eines Sattelschleppers, die ein den Königsbolzen (11) des Aufliegers zumindest teilweise umgebendes Gehäuse aufweist, das mit wenigstens einem zwischen einer Schließlage und einer Loslage beweglichen Verschlußmittel versehen ist, das mit dem oberen Teil (21) des Königsbolzens (11) in Eingriff bringbar ist und in der Schließlage einen Freiraum begrenzt, dessen kleinste lichte Weite größer als oder gleich dem äußeren Durchmesser des oberen Teils (20) des Königsbolzens und zumindest an einer Stelle kleiner als der äußere Durchmesser des unteren erweiterten Teils (21) des Königsbolzens (11) ist, dadurch gekennzeichnet, daß das Gehäuse wenigstens eine Aussparung aufweist, die größer als oder gleich dem größten Durchmesser des Königsbolzens (11) ist, und das Verschlußmittel als drehbar in dem Gehäuse gelagerte Scheibe ausgebildet ist, die mit einem radial nach außen weisenden Vorsprung versehen ist, der in der Schließlage in die Aussparung eingreift, so daß die Vorrichtung in Schließlage nicht vom Königsbolzen (11) abgezogen werden kann.

9. Vorrichtung nach einem der Ansprüche 1 bis 8, dadurch gekennzeichnet, daß die Verschlußmittel (17) in der Schließlage durch wenigstens ein Schloß (33) verschließbar sind.

10. Vorrichtung nach einem der Ansprüche 1 bis 9, dadurch gekennzeichnet, daß das Verschlußmittel (17) wenigstens eine Aussparung (35) aufweist, in die wenigstens ein Schließstift (34) eingreift.

11. Vorrichtung nach einem der Ansprüche 1 bis 10, dadurch gekennzeichnet, daß die Aussparung axial verläuft.

12. Vorrichtung nach einem der Ansprüche 1 bis 11, dadurch gekennzeichnet, daß der Schließstift (34) durch ein Zylinderschloß (33) betätigbar ist.

13. Vorrichtung nach einem der Ansprüche 1 bis 12, dadurch gekennzeichnet, daß die Abmessungen des Gehäuses (12) und der Verschlußmittel (17) so gewählt sind, daß die Vorrichtung in der Schließlage spielfrei am Königsbolzen (11) gehalten wird.

14. Vorrichtung nach einem der Ansprüche 1 bis 13, dadurch gekennzeichnet, daß das Gehäuse (12) auf seiner dem Königsbolzen (11) abgekehrten Seite verschlossen ist.

15. Vorrichtung nach einem der Ansprüche 1 bis 14, dadurch gekennzeichnet, daß zumindest die beweglichen Mittel mit einer korrosionsbeständigen Schicht versehen sind.

16. Vorrichtung nach einem der Ansprüche 1 bis 15, dadurch gekennzeichnet, daß zumindest die beweglichen Mittel mit einer festschmierstoffhaltigen Schicht versehen sind.

17. Vorrichtung nach einem der Ansprüche 1 bis 16, dadurch gekennzeichnet, daß zumindest die beweglichen Mittel mit einer Schicht aus Polytetrafluorethylen beschichtet sind.
